# EUROPEAN PATENT APPLICATION

(11) **EP 3 393 011 A1**
(43) Date of publication of application: **24.10.2018**
(21) Application number: 17166740.5
(22) Date of filing: 18.04.2017
(51) Int. Cl.: H02K 3/12, H02K 3/34, H02K 3/30, H01F 27/32, H02K 1/02, H02K 1/12, H01F 27/34

(54) **CONDUCTOR STRUCTURE IN AN INDUCTIVE DEVICE**

(71) Applicant: ABB Schweiz AG, 5400 Baden (CH)
(72) Inventor: ISLAM, Jahirul, 724 71 Västerås (SE); THOLENCE, Frederic, 723 48 Västerås (SE)
(74) Representative: Savela, Reino Aleksi

(57) **Abstract**

The invention is concerned with an inductive device having a rated operating voltage and comprising a winding, where a conductor of the winding is surrounded by an inter-turn layer (22) having a thickness corresponding to the rated operating voltage, where the conductor comprises at least two conductor sections (20A, 20B, 20C, 20D, 20E) separated from each other by at least one intra-conductor layer (24A, 24B, 24C, 24D) having a thickness that is unrelated to the rated operating voltage and lower than the thickness of the at least one inter-turn layer (22).

## Description

### FIELD OF INVENTION

The present invention generally relates to the conductor structure of an inductive device. The invention is more particularly concerned with an inductive device having a rated operating voltage and comprising a winding, where a conductor of the winding is surrounded by an inter-turn layer having a thickness corresponding to the rated operating voltage.

### BACKGROUND

Form-wound conductors are commonly used in various inductive devices such as in high, medium and some low voltage electrical machines. In this case, the form-wound conductor may be placed in slots provided in an inductive element of the inductive device, such as in the stator of an electrical machine.

In a form-wound conductor winding, the eddy-current loss can be a significant loss component due to the skin effect. It is possible to reduce or even eliminate the eddy-current loss.

One document addressing eddy-current loss reduction is US 2014/0300239, which discloses the grouping together of conductor strands to form stator windings in an electrical machine.

Another document that discusses the forming of a stator winding is JPS 64001445, which discloses the ultrasonic welding of conductor strands forming a stator winding.

However, the reduction of the eddy-current loss is typically made at the expense of significantly reducing the filling factor of the machine, i.e. the degree with which the conductor is filled into the slots. As a consequence, the Direct Current (DC) resistive loss increases for the identical machine dimensions.

There is therefore a need for providing an inductive device where eddy-current losses can be reduced or eliminated while at the same time avoiding or limiting such a DC resistive loss increase.

### SUMMARY OF THE INVENTION

One object of the present invention is therefore to provide an inductive device where eddy-current losses can be reduced or eliminated while at the same time avoiding or limiting a DC resistive loss increase.

This object is achieved through an inductive device having a rated operating voltage and comprising a winding, where a conductor of the winding is surrounded by an inter-turn layer having a thickness corresponding to the rated operating voltage,
where the conductor comprises at least two conductor sections separated from each other by at least one intra-conductor layer having a thickness that is unrelated to the rated operating voltage and lower than the thickness of the at least one inter-turn layer.
The invention has a number of advantages. It improves the efficiency of the inductive device through reducing the eddy-current losses while limiting the DC resistive loss increase. Another advantage is that the inductive machine can be compact. Also a high slot filling factor is retained.

### BRIEF DESCRIPTION OF THE DRAWINGS

The present invention will in the following be described with reference being made to the accompanying drawings, where
fig. 1 schematically shows an inductive device in the form of a motor comprising a stator and a rotor,
fig. 2 schematically shows a slot in the stator into which a number of turns of a conductor have been placed,
fig. 3 schematically shows the division of a conductor into a stack of conductor sections,
fig. 4 schematically shows the division of a conductor into two stacks of conductor sections, and
fig. 5 schematically shows the division of a conductor into four stacks of conductor sections.

### DETAILED DESCRIPTION OF THE INVENTION

The present invention concerns inductive devices in low, medium or high voltage applications. An inductive device comprises at least one winding, and may as an example be a transformer, a reactor or an electric machine such as an electric motor or electric generator.

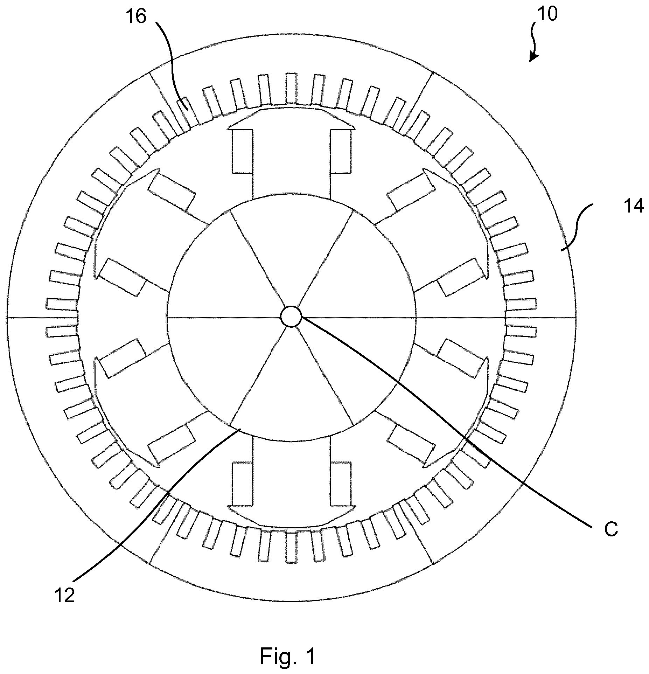

In fig. 1, there is shown an exemplifying electric machine, which in this case is an electric motor 10. As is well known in the art, such a machine comprises a stator 14 and a rotor 12 that cooperate with each other, where the stator 14 is a first inductive element and the rotor 12 is a second inductive element. The inductive device is rated for a certain operating voltage, i.e. a voltage at which it may be safely operated. The operating voltage may be in the low, medium or high voltage range. Such a rated voltage may as an example be a voltage above 500 V. The inductive device may also have an operating frequency, for instance of 50 or 60 Hz, where the operating frequency is also the fundamental frequency of the device.

It can also be seen in fig. 1 that the rotor 12 is set to rotate around a device center C, which in this case is a central axis. The rotor 12 is furthermore surrounded by the stator 14. There is also typically an air gap between the stator 14 and the rotor 12. As can also be seen in fig. 1, the stator 14 comprises slots 16 where turns of a stator winding may be inserted. Furthermore, the stator is centered round the device center C and the slots also have a radial orientation in relation to the device center C.

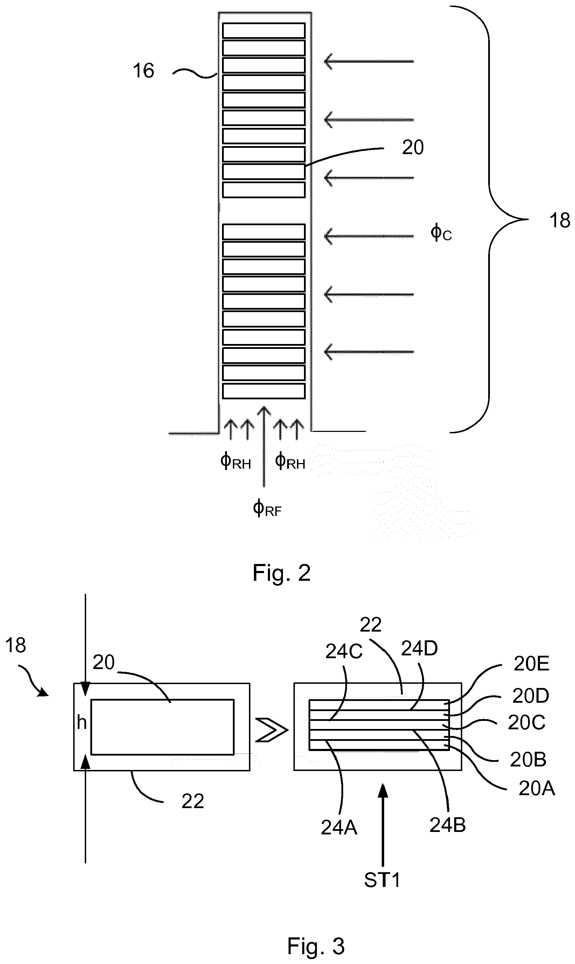

Fig. 2 schematically shows a number of such turns of a winding 18 being inserted into a stator slot 16. The winding 18 may as an example be made up of one or more conductors 20.

It can be seen in fig. 2 that a conductor of the winding is form-wound in order to be adapted to the slot shape. It can more particularly be seen that the different turns of the winding 18 are stacked upon each other in the slot 16.

The eddy-current losses in a form-wound stator winding are basically generated due to a magnetic slot leakage flux comprising fundamental and harmonic flux (higher than the fundamental). The slot leakage flux can be divided into radial and circumferential components φ_{R} and φ_{C}. Both the harmonic flux φ_{RH} and fundamental leakage flux φ_{RH} pass through radially, and the dimension of the conductor width produce eddy-current losses. However, typically in a slot only the conductor turns closest to the device center, for instance the first two or three turns counted from the device center, may be exposed to the radial fundamental and harmonic leakage fluxes. The losses caused by these fluxes can be reduced by bringing the conductor turns closest to the device center further away from the device center.

However, all the conductor turns in the slot are also exposed to circumferential leakage flux φ_{C} that passes from one slot to another. This circumferential leakage flux φ_{C} is also responsible for the production of the majority of the eddy-current losses. To minimize this loss component, the height h of homogeneous conductive material needs to be reduced. However, when conductive material is replaced with less conductive material or insulator the Direct Current (DC) resistance of the winding 18 increases and therefore also the resistive loss of the machine increases.

In order to reduce the eddy-current losses while at the same time limiting the DC resistance increase, aspects of the invention propose the division of the conductor into a number of sections, where these sections are stacked upon each other in at least one stack in the radial direction. Thereby the height of homogeneous conductive material is reduced.

The left side of fig. 3 schematically shows the cross-section through one conductor 20 of the winding 18 made of homogeneous conductor material having a height h, while the right side of fig. 3 shows a conductor 20 divided into different sections 20A, 20B, 20C, 20D and 20E in order to reduce the height of homogeneous conductor material. In the example given here there are five such sections: a first section 20A, a second section 20B, a third section 20C, a fourth section 20D and a fifth section 20E stacked upon each other in a first stack ST1 in the radial direction away from the device center C.

The conductor is in both cases surrounded by an inter-turn layer 22 of insulating material. The inter-turn layer surrounds the conductor and is provided between the turns. The inter-turn layer 22 has a thickness that corresponds to the rated operational voltage of the inductive device. Typically the higher the rated voltage is the thicker the inter-turn layer is. The inter-turn layer may furthermore act as a magnetic shunt. The inter-turn layer may for this reason comprise a layer of magnetic material, such as iron, electrical steel or an amorphous material.

The sections 20A, 20B, 20C, 20D and 20E are separated from each other by at least one intra-conductor layer 24A, 24B, 24C and 24D, i.e. at least one layer provided in the interior of the conductor 20 between the different sections. In the example in fig. 3 there is a first intra-conductor layer 24A between the first and second sections 20A and 20B, a second intra-conductor layer 24B between the second and third sections 20B and 20C, a third intra-conductor layer 24C between the third and fourth sections 20C and 20D and a fourth intra-conductor layer 24D between the fourth and fifth sections 20D and 20E. Each intra-conductor layer has a thickness that is independent of or unrelated to the rated operational voltage. They are thus not dimensioned in order to be sufficient for handling the rated operational voltage of the electric machine. Moreover, the thickness of each intra-conductor layer is lower than the thickness of the inter-turn layer. It may for instance be considerably lower than the inter-turn layer 22.

As an example, each intra-conductor layer may have a thickness that is lower than 0.3 mm. In some cases it may even be lower than 25 µm. It may additionally have a thickness that is higher than 1 µm. The thickness may thus lie in the range of 1 µm - 0.3 mm.

It may also here be mentioned that each intra-conductor layer may comprise a layer of magnetic material.

Through this combination of the conductor sections and intra-conductor layers the problem of reducing eddy-current losses combined with resistive losses is solved.

In this way, there is provided a structure that addresses the eddy-current problem with potentially only a limited reduction of the filling factor and thus the DC resistance may be essentially retained.

Through increasing the number of conductor sections, the eddy-current loss can be lowered to a negligible range. A side effect of this is that the slot height increases or the slot filling factor decreases due to additional insulation between the conductor sections. However, as this insulation does not have to consider the rated operational voltage, it may be made very thin. Thereby it is possible to minimize the size of the intra-conductor layer so that the filling factor of the winding is essentially retained or marginally reduced.

In table I, there is shown simulations of the conduction losses in kW of an exemplifying electrical machine with an operating voltage of 15 kV for various numbers of conductor sections in the conductor. The different loss values in table I have been normalized in relation to the losses without sections.

**Table I**

| 15 kV machine | 1 | 2 | 3 | 4 | 5 | 6 | 7 | 8 |
|---|---|---|---|---|---|---|---|---|
| Eddy-current loss (kW) | 1 | 0.74 | 0.33 | 0.20 | 0.12 | 0.08 | 0.06 | 0.04 |
| Total stator resistive loss | 1 | 0.83 | 0.81 | 0.80 | 0.80 | 0.79 | 0.79 | 0.79 |
| Field winding losses | 1 | 1.00 | 1.00 | 1.00 | 1.00 | 1.00 | 1.01 | 1.01 |
| Stator Iron loss | 1 | 1.00 | 1.00 | 1.01 | 1.02 | 1.02 | 1.02 | 1.03 |
| Rotor iron loss | 1 | 1.02 | 1.00 | 1.00 | 1.00 | 1.00 | 1.00 | 1.00 |
| Rotor bar loss | 1 | 1.00 | 1.00 | 1.00 | 1.00 | 1.00 | 1.00 | 1.00 |
| Total electromagnetic loss | 1 | 0.94 | 0.94 | 0.93 | 0.93 | 0.93 | 0.93 | 0.94 |

It can be seen that the lowest total electromagnetic loss is obtained between four and seven sections. It can also be seen that if only eddy-current loss and resistive loss are considered then a number of between six and eight sections may be even more desirable.

The above described construction has a number of advantages. It provides:
- Universal conductor height for all the form-wound winding irrespective of the voltage level of the electrical machine,
- Possibility to design compact electrical machine with an intra-conductor layer thickness that is low, for instance lower than 25 µm,
- Efficiency improvement for all contemporary electrical machines with form-wound multi-conductor windings. More than 4% of the total loss can be reduced from a traditional form wound winding electrical machine.
- Reduce eddy-current loss to negligible range (Around 95% of the eddy-current loss from the stator winding can be eliminated.)
- It will be possible design a more compact electrical machine
- A higher filling factor can be achieved if the same additional loss as the traditionally manufactured winding system is allowed.

The conductor shown in the right side of fig. 3 is in many cases sufficient for limiting the eddy-current losses.

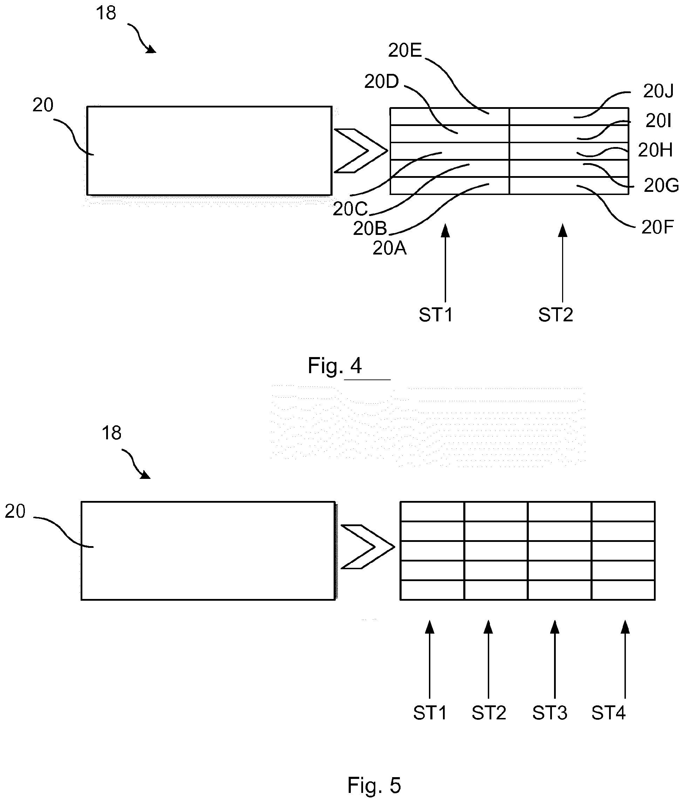

However, it is possible to improve the loss reduction even further through providing more than one stack of conductor sections in a winding. One variation of this is shown in the right side of fig. 4, where a conductor comprises two parallel stacks ST1 and ST2 of conductor sections placed side by side in the circumferential direction. Each stack comprises five radially stacked sections 20A, 20B, 20C, 20D, 20E and 20F, 20G, 20H, 20I, 20J, respectively. Also here there is at least one intra-conductor layer between the sections of each stack. There is also at least one intra-conductor layer between the two stacks. This structure reduces most of the eddy-current loss generated in the form-wound stator winding of an electrical machine.

This type of forming of conductor sections may be made for the conductor turns that are exposed to both the radial main flux and the harmonic flux, which may be the two or three conductor turns of the winding in a slot that are closest to the device center.

As can be seen in the right part of fig. 5, it is possible to divide a conductor into even further stacks. In this example there are four stacks ST1, St2, ST3 and ST4 with five conductor sections each.

It is thus possible that the conductor turns closest to the device center, such as the first two or three turns counted from the device center, are the turns that have parallel stacks in the above-described ways, while the conductor turns above them only comprise one stack.

It is possible that a conductor with stacked conductor sections is formed through laser joining (seam weld), induction heating (seam and spot welds), friction spot welding (spot weld) and friction lap joining (seam weld). Moreover, it is possible that solid state bonding or cold welding techniques are used, where one example of a suitable cold welding technique is ultrasonic welding (USW).

A conductor section may be formed in a sandwiched structure and may comprise at least one ribbon of soft magnetic material layer that separates two thicker halves of homogeneous copper material. Two or more such conductor sections may thereafter be joined to each other via an intra-conductor layer.

The production of such a sandwich structure is quite challenging. It is of common knowledge that diffusion bonding Copper to ferrous alloys may often require an intermediate layer such as Nickel. Diffusion bonding might as such be difficult when dealing with thin layers as the interdiffusion layer might have both poor electrical and magnetic properties.

USW of metallic material is a solid-state process where true metallurgical bonds between layers of material are created without generating molten metal at the interface. This particular welding technique is extensively used in the fields of electronic, aerospace, automotive industry, medical industry since the chemical composition is not harmed nor changed and joints on microscales are able to be produced. As heat is not involved in the process, the mechanical and electrical properties of the welded components are not significantly affected either.

The USW process is a micro-friction process. During USW, the metallic material being joined is translated against a previously built conductor volume at very high frequency and low amplitude using an anvil. As this occurs, surface contaminants such as oxides are fractured and displaced, and atomically clean surfaces are brought into intimate contact under modest pressures at temperatures that typically do not exceed 0.5 Tm, where Tm is the melting temperature. Plastic flow occurs in a narrow interfacial zone about 10 µm in width. A strong, featureless bond zone results, without the coarse, re-melted or interdiffusion zones characteristic of most alternative welding processes. Oxides at the build material surface, and inclusions present in the build material are broken up and distributed in the bond zone.

The advantages of ultrasonic welding include the following:
- permits dissimilar metal joints and polymer metal joints. Copper has also been USW welded to copper coated steels.
- permits joining thin to thick materials which can be of interest to start the process with a "thick" Copper winding instead of Copper foils
- provides joints with good thermal and electrical conductivity
- joints metals without the heat of fusion and decreased mechanical properties
- provides efficient energy use
- requires no filler materials, fluxes, or special atmosphere,
- usually requires no special cleaning processes
- welds through most oxides

USW is normally suitable for non-ferrous soft metals and their alloys such as Aluminum (up to 3 mm thick plates), Copper (up to 2 mm), Brass, Silver and Gold. However, it is also a suitable technique for joining metals such as Titanium, Nickel and their dissimilar combinations such as Aluminum/steel, metal/ceramic, metal/glass, Aluminum/Copper etc.

It is also possible to use USW for joining an insulation layer such as a polymer layer. This may be different from welding metal to metal. Basically, welding metal to metal is done by vibrating the anvil in a planar direction of the foils while welding polymers requires a normal (compressive) vibration. Potential candidates for use as intra-conductor insulating materials are polypropylene (PP), polyethylene (PE) or polyetheretherketone (PEEK) with possible fillers and possibly metallized.

Alternative direct joining of metals to plastic materials have been investigated such as laser joining (seam weld), induction heating (seam and spot welds), friction spot welding (spot weld) and friction lap joining (seam weld).

A winding may have to be continuously produced, and for this reason an automated joining process may be employed.

Among the different USW methods that exist, one technique may be used to produce continuous seam welds. Instead of using a static anvil, it is alternatively possible with equipment that uses two disk-shaped ultrasonically vibrating rollers to apply the radial force and vibration.

The manufacturing equipment used to produce a conductor for a winding may comprise a series of successive cold welding devices intended to cold weld foils onto previous layers. This can be seen as an additive manufacturing process similar to sheet lamination process as defined by American Society for testing and materials (ASTM). In that way, the sandwiched conductor may be built layer by layer. The initial layer might be a thicker Copper (Aluminum) layer. The following layers are cold welded onto the previous one and may comprise thin foils of material where at least one has a chemical composition different from the others.

An insulating layer has a considerably lower conductivity than a conductor. It has a conductivity that is less than half the conductivity of the conductor.

From the foregoing discussion it is evident that the present invention can be varied in a multitude of ways.

It shall consequently be realized that the present invention is only to be limited by the following claims.

## Claims

1. An inductive device (10) having a rated operating voltage and comprising a winding, where a conductor of the winding is surrounded by an inter-turn layer (22) having a thickness corresponding to the rated operating voltage,
where the conductor comprises at least two conductor sections (20A, 20B, 20C, 20D, 20E; 20A, 20B, 20C, 20D, 20E, 20F, 20G, 20H, 20I, 20J) separated from each other by at least one intra-conductor layer (24A, 24B, 24C, 24D) having a thickness that is unrelated to the rated operating voltage and lower than the thickness of the at least one inter-turn layer (22).

2. The inductive device (10) according to claim 1, wherein the intra-conductor layer has a thickness below 0.3 mm.

3. The inductive device (10) according to claim 2, wherein the at least one intra-conductor layer comprises an insulating material.

4. The inductive device according to any previous claim, wherein the at least one intra-conductor layer comprises a magnetic material.

5. The inductive device according to any previous claim, wherein the inter-turn layer comprises an insulating material.

6. The inductive device according to any previous claim, wherein the inter-turn layer comprises a magnetic material.

7. The inductive device (10) according to any previous claim, wherein the conductor comprises at least two parallel stacks (ST1, ST2; ST1, ST2, ST3, ST4) of conductor sections.

8. The inductive device (10) according to claim 7, wherein the number of parallel stacks is four (ST1, ST2, ST3, St4).

9. The inductive device (10) according to any previous claim, wherein conductor sections with at least one intra-conductor layer have been joined to each other using ultrasonic welding.

10. A stator for a rotating electrical machine comprising an inductive device (10) according to any previous claim, wherein the inductive device comprises a device center (C) and at least some of the conductor sections are stacked upon each other in a radial direction from the device center.

11. The stator according to claim 10, wherein the number of conductor sections stacked in the radial direction of the conductor is between 4 and 8, such as between 4 and 7 or between 6 and 8.

12. The stator according to claim 10 or 11, wherein the winding comprises a plurality of turns stacked upon each other, and the turns closest to the device center (C) comprise conductors with at least two parallel stacks (ST1, ST2; ST1, ST2, ST3, ST4) of conductor sections.

13. The stator according to claim 12, wherein two or three turns closest to the device center (C) comprise conductors with at least two parallel stacks (ST1, ST2; ST1, ST2, ST3, ST4) of conductor sections.

14. A transformer comprising an inductive device (10) according to any of claims 1 - 9.
